# EUROPÄISCHE PATENTSCHRIFT

(11) **EP 3 341 157 B1**
(45) Veröffentlichungstag und Bekanntmachung des Hinweises auf die Patenterteilung: **12.08.2020**
(21) Anmeldenummer: 16797846.9
(22) Anmeldetag: 15.11.2016
(51) Int. Cl.: B23Q 15/24, B65G 54/02, G05B 19/19

(54) **VERFAHREN ZUR BEWEGUNG EINES LÄUFERS, LINEARANTRIEB UND PRODUKTION- ODER VERPACKUNGSMASCHINE**
METHOD FOR MOVING A ROTOR, LINEAR DRIVE, AND PRODUCTION OR PACKAGING MACHINE
PROCÉDÉ DE DÉPLACEMENT D'UN ROTOR, ENTRAÎNEMENT LINÉAIRE ET MACHINE DE PRODUCTION OU D'EMBALLAGE

(30) Priorität: 24.11.2015 EP 15196047; 24.11.2015 EP 15196041; 24.11.2015 EP 15196077; 21.03.2016 EP 16161436; 21.03.2016 EP 16161437; 21.03.2016 EP 16161433
(43) Veröffentlichungstag der Anmeldung: 04.07.2018
(73) Patentinhaber: Siemens Aktiengesellschaft, 80333 München (DE)
(72) Erfinder: JÄNTSCH, Michael, Princeton, NJ 08540 (US); SPINDLER, Carsten, 07368 Remptendorf (DE)
(86) Internationale Anmeldenummer: PCT/EP2016/077738
(87) Internationale Veröffentlichungsnummer: WO 2017/089182

(56) Entgegenhaltungen:
- EP-A2- 0 409 190
- WO-A1-2015/071228
- DE-A1-102008 008 602

## Beschreibung

Die Erfindung betrifft Verfahren zur Bewegung eines Läufers, einen Linearantrieb, und eine Produktions-, Werkzeug- oder Verpackungsmaschine.

Linearantriebe, auch als lineare Transportsysteme oder Multi-Carrier-Systems bezeichnet, finden im Bereich von Produktionsmaschinen, Verpackungsmaschinen oder Werkzeugmaschinen breite Anwendung. Ein Linearantrieb dient zur Bewegung von Läufern auf Segmenten. Ein Segment kann als Primärelement eines Linearmotors ausgestaltet sein. Auf dem Segment werden ein Läufer oder mehrere Läufer bewegt. Ein Läufer ist in einem solchen Fall wie ein Sekundärelement eines Linearmotors ausgestaltet. Der Läufer dient zum Transport eines Guts oder eines Werkstücks.

Beim Übergang eines Läufers von einem Segment auf ein weiteres Segment bzw. von einem geregelten in einen gesteuerten Betrieb und umgekehrt kann es zu einer unerwünschten Beschleunigung (Ruck) kommen. Als Ruck wird regelmäßig die zeitliche Änderung der Beschleunigung eines Elements verstanden.

Die Offenlegungsschrift DE 10 2008 008 602 A1 zeigt eine Transfervorrichtung für Werkstückträger mit einem Master-Slave-Verhalten zwischen benachbarten Linearmotor-Segmenten.

Die Offenlegungsschrift DE 10 2012 025 326 A1 zeigt ein Verfahren zum Betreiben eines elektromagnetischen Transportsystems, wobei Gruppen von Magnetspulen einheitlich angesteuert werden.

Die Europäische Patentanmeldung EP 2 141 019 A1 beschreibt ein Verfahren zum Separieren von wenigstens zwei Brücken eines segmentierten Transportsystems für Bedruckstoffe.

Daher ist es Aufgabe der Erfindung, bei der Bewegung eines Läufers auf einem Segment eine unerwünschte Beschleunigung oder einen unerwünschten Ruck zu vermeiden.

In einem ersten Verfahren zur Bewegung eines Läufers auf ein Segment werden die folgenden Verfahrensschritte durchgeführt:
- Bewegen des Läufers zumindest bereichsweise auf das Segment,
- Ermittlung der Ist-Geschwindigkeit des Läufers,
- Bereitstellung der ermittelten Ist-Geschwindigkeit an eine Steuereinheit,
- Bestimmung einer Soll-Geschwindigkeit für den Läufer aus der Ist-Geschwindigkeit des Läufers bei der Bewegung des Läufers auf das Segment,
- Bereitstellung eines Stromes von der Steuereinheit für das Segment zur Bewegung des Läufers mit der Soll-Geschwindigkeit,
wobei der Strom gemäß der Soll-Geschwindigkeit bereitgestellt wird, wobei nach der Bewegung des Läufers auf das Segment die Soll-Geschwindigkeit der Ist-Geschwindigkeit des Läufers entspricht.

In einem zweiten Verfahren zur Bewegung eines Läufers von einem Segment auf eine Transportstrecke werden die folgenden Verfahrensschritte durchgeführt:
- Bewegen des Läufers zumindest bereichsweise auf dem Segment,
- Bestimmung einer Soll-Fluchtgeschwindigkeit für den Läufer, wobei die Soll-Fluchtgeschwindigkeit derart gewählt ist, dass der Läufer das Segment verlassen kann,
- Bereitstellung eines Stromes von der Steuereinheit für das Segment zur Bewegung des Läufers zumindest mit der Soll-Fluchtgeschwindigkeit.

Die oben gennannte Aufgabe wird mit einem Verfahren zum Übergang einer gesteuerten Bewegung eines Läufers in eine geregelte Bewegung des Läufers auf einem Segment eines Linearantriebs gelöst,
wobei der Linearantrieb Segmente und zumindest einen Läufer aufweist,
wobei der Läufer zur Bewegung auf dem Segment ausgebildet ist,
wobei bei einem Wechsel von der gesteuerten Bewegung zur geregelten Bewegung ein Regler für die geregelte Bewegung derart vorinitialisiert wird, dass der Übergang im Wesentlichen ruckfrei vollzogen wird,
- wobei das Segment zur Bewegung des Läufers auf dem Segment entlang einer Richtung dient, wobei die Bewegung von einem Magnetfeld initiiert wird, wobei das Magnetfeld mit Hilfe von Spulen des Segments durch einen Strom erzeugt wird, wobei der Strom durch eine einem Segment zugeordnete Steuereinheit bereitgestellt wird;
umfassend die folgenden Verfahrensschritte:
- Bestimmung einer Geschwindigkeit des Läufers auf dem Segment und Ermittlung eines Kommutierungswinkels eines Stromzeigers des Stroms,
- Ermittlung eines kraftbildenden Stroms des Stromzeigers im gesteuerten Betrieb aus einem vorgegebenen Kommutierungswinkel und dem ermittelten Kommutierungswinkel, wobei der vorgegebene Kommutierungswinkel bis unmittelbar vor dem Übergang im gesteuerten Betrieb vorgegeben wird, wobei zur Ermittlung des kraftbildenden Stroms eine Differenz zwischen dem vorgegebenen Kommutierungswinkels und dem ermittelten Kommutierungswinkel bestimmt wird;
- Regelung der Geschwindigkeit des Läufers mit einem Geschwindigkeits-Regelkreis, wobei der Geschwindigkeits-Regelkreis einen Sollwert des kraftbildenden Stroms für einen Strom-Regelkreis vorgibt,
- Vorinitialisierung eines Integralanteils des Geschwindigkeits-Reglers durch den im gesteuerten Betrieb ermittelten kraftbildenden Strom.

Unter einem ruckfreien Übergang der Bewegung des Läufers von einer geregelten Bewegung in eine gesteuerte Bewegung des Läufers (und umgekehrt) wird verstanden, dass das der Strom bzw. die Spannung, die dem Segment zugeführt wird, stetig und möglichst ohne unvorhergesehene Änderung verläuft.

Außerdem wird diese Aufgabe mit einem Verfahren zum Übergang einer geregelten Bewegung eines Läufers in eine gesteuerte Bewegung des Läufers auf einem Segment eines Linearantriebs, wobei der Linearantrieb Segmente und zumindest einen Läufer aufweist,
wobei der Läufer zur Bewegung auf dem Segment ausgebildet ist,
wobei bei dem Übergang von der geregelten Bewegung zur gesteuerten Bewegung ein vorgegebener Kommutierungswinkel für die gesteuerte Bewegung derart vorinitialisiert wird, dass der Übergang im Wesentlichen ruckfrei vollzogen wird,
- wobei das Segment zur Bewegung des Läufers auf dem Segment entlang einer Richtung dient, wobei die Bewegung von einem Magnetfeld initiiert wird, wobei das Magnetfeld mit Hilfe von Spulen des Segments durch einen Strom erzeugt wird, wobei der Strom durch eine einem Segment zugeordnete Steuereinheit bereitgestellt wird;
umfassend die folgenden Verfahrensschritte:
- Bestimmung einer Geschwindigkeit des Läufers auf dem Segment und Ermittlung eines Kommutierungswinkels des Stroms im geregelten Betrieb,
- Regelung der Geschwindigkeit des Läufers mit einem Geschwindigkeits-Regelkreis, wobei der Geschwindigkeits-Regelkreis einen kraftbildenden Strom als Sollwert für einen Strom-Regelkreis vorgibt,
- Vorinitialisierung des vorgegebenen Kommutierungswinkels aus dem kraftbildenden Strom und dem ermittelten Kommutierungswinkel,
- Steuerung der Geschwindigkeit des Läufers durch Vorgabe eines Stromzeigers, der mit einer aus einer Soll-Geschwindigkeit ermittelten Frequenz rotiert.

Die Aufgabe wird weiter mit einem Linearantrieb, ausgebildet zur Durchführung des zuvor genannten Verfahrens zum Übergang einer gesteuerten Bewegung eines Läufers in eine geregelte Bewegung des Läufers oder des zuvor genannten Verfahrens zum Übergang einer geregelten Bewegung eines Läufers in eine gesteuerte Bewegung des Läufers, gelöst.

Die Aufgabe wird weiter mit einer Produktionsmaschine, einer Werkzeugmaschine und einer Verpackungsmaschine, aufweisend einen derartigen Linearantrieb, gelöst.

Vorteilhafte Ausgestaltungen und Weiterbildungen der Erfindung sind Gegenstand der abhängigen Ansprüche.

Unter einem Segment wird ein Stator eines Linearmotors bzw. ein Primärelement eines Linearmotors verstanden. Ein Läufer kann als Sekundärelement eines Linearmotors ausgestaltet sein.

Das Segment dient zur Bewegung des Läufers auf dem Segment entlang einer Richtung. Die Bewegung wird vorzugsweise von einem Magnetfeld initiiert.

Das Magnetfeld wird mit Hilfe von Spulen des Segments durch einen Strom erzeugt, wobei der Strom durch die Steuereinheit bereitgestellt wird. Vorzugsweise ist einem Segment jeweils eine Steuereinheit zugeordnet.

Segmente sind vorteilhaft sequenziell aneinander positioniert, so dass ein Läufer entlang einer Mehrzahl von Segmenten bewegt werden kann. Die Segmente können auch zur Bewegung einer Mehrzahl von Läufern ausgebildet sein.

Der Linearantrieb kann bereichsweise mit Förderbändern ergänzt sein. Das Förderband kann ebenfalls einen Läufer auf ein Segment bewegen. Das Förderband kann auch zur Aufnahme eines Läufers von einem Segment ausgestaltet sein. Ein Förderband ist in der Regel kostengünstiger für einen Transport eines Läufers über eine weite Distanz.

Vorteilhaft wird die Ist-Geschwindigkeit des Läufers mit einem Sensor ermittelt, wobei der Sensor dem Segment zugeordnet ist. Der Sensor kann vorteilhaft die Ist-Geschwindigkeit des Läufers ermitteln, bevor und/oder während der Läufer auf das Segment bewegt wird.

Bei der Bewegung des Läufers auf das Segment, insbesondere von einem Förderband aus, kann die Regelung der Ist-Geschwindigkeit zunächst deaktiviert werden. Nach der Bewegung des Läufers auf das Segment, also sobald sich ein Teil des Läufers auf dem Segment befindet, kann die Aktivierung der Geschwindigkeitsregelung erfolgen. Die Regelung der Ist-Geschwindigkeit kann lediglich in einem geregelten Bereich erfolgen, also auf Segmenten, denen ein Sensor zugeordnet ist.

Hier vorgestellt wird ein Verfahren zum Übergang eines Läufers von einer gesteuerten Bewegung zu einer geregelten Bewegung. Weiter wird ein Verfahren vorgestellt, bei dem ein Läufer von einer geregelten Bewegung in eine gesteuerte Bewegung überführt wird.

Der Übergang von der gesteuerten Bewegung zu der geregelten Bewegung des Läufers auf einem Segment kann bei einem Läufer angewandt werden, der auf das Segment bewegt wird und bei einem Läufer, der sich bereits auf dem Segment befindet.

Unter der Bewegung eines Läufers auf das Segment wird beispielsweise eine Bewegung des Läufers, welcher neu auf das Segment geschoben wird, verstanden.

Ein Segment oder mehrere aufeinanderfolgende Segmente mit einem Sensor oder mehreren Sensoren werden hier als geregelter Bereich bezeichnet. Vorteilhaft kann zur Regelung der Bewegung ein Sensor einem Segment zugeordnet sein. Segmente oder Förderbänder ohne einen Sensor zur Bestimmung der Geschwindigkeit und/oder der Position des Läufers werden hier als gesteuerter Bereich bezeichnet. Der Sensor kann als Positionssensor ausgeführt werden. Der Sensor ist mit der Steuereinheit verbunden und stellt die ermittelte Position und/oder Ist-Geschwindigkeit des Läufers für die Steuereinheit bereit.

Die Läufer weisen vorteilhaft Mittel zur Bestückung der Läufer mit einem Werkstück oder einem sonstigen Gut, wie einem zu befüllenden oder einem zu etikettierenden Gefäß, auf.

### 1. Allgemeine Beschreibung einer Regelung

Der Läufer bewegt sich mit einer Ist-Geschwindigkeit auf dem Segment. Die Soll-Geschwindigkeit wird vorteilhaft in der Steuereinheit berechnet. Die Sollgeschwindigkeit gibt den Strom vor, der von der Steuereinheit dem zugeordneten Segment bereitgestellt wird. Bei einer Abweichung der Ist-Geschwindigkeit von der Soll-Geschwindigkeit des Läufers kann der Strom für das Segment korrigiert werden.

Bei einer Abweichung der Ist-Geschwindigkeit von der Soll-Geschwindigkeit bei einer Bewegung des Läufers auf dem Segment kann die Differenz mit Hilfe eines Proportional-Reglers (P-Regler), einem Proportional-Integral-Regler (PI-Regler) und/oder einem Proportional-Integral-Diffenzial-Regler (PID-Regler) vermindert werden. Durch den P-, PI- oder PID-Regler wird eine möglichst beschleunigungsarme Änderung der Ist-Geschwindigkeit zur Soll-Geschwindigkeit hin ausgeführt.

Vorteilhaft ist das Verfahren beim Übergang von einem gesteuerten Bereich zu einem geregelten Bereich einsetzbar. Bei dem Verfahren ermittelt der Sensor, der dem Segment zugeordnet ist, die Ist-Geschwindigkeit des Läufers zu einem ersten Zeitpunkt, wenn der Läufer das Segment erreicht und/oder der Läufer sich schon bereichsweise auf dem Segment befindet.

Die Steuereinheit kann zum ersten Zeitpunkt die Ist-Geschwindigkeit empfangen. Die Steuereinheit ist zum ersten Zeitpunkt betriebsbereit. Zum ersten Zeitpunkt ist eine Regelung der Ist-Geschwindigkeit für den Läufer nicht aktiv. Die ermittelte Ist-Geschwindigkeit des Läufers wird die Soll-Geschwindigkeit für einen zweiten Zeitpunkt. Die Steuereinrichtung schaltet die Regelung der Ist-Geschwindigkeit zum zweiten Zeitpunkt ein. Als Soll-Geschwindigkeit für den Läufer zum zweiten Zeitpunkt dient die ermittelte Ist-Geschwindigkeit des Läufers zum ersten Zeitpunkt. Der zeitliche Abstand zwischen dem ersten Zeitpunkt und dem zweiten Zeitpunkt beträgt vorteilhaft unter 500 Millisekunden.

Nach dem zweiten Zeitpunkt befindet sich der Läufer in dem geregelten Bereich. Im geregelten Bereich wird die Ist-Geschwindigkeit anhand einer vorgegebenen Soll-Geschwindigkeit geregelt.

Weist das Segment eine Mehrzahl von Spulen zur Bereitstellung des Magnetfeldes auf, die mit einem Dreiphasen-Wechselstrom beaufschlagt werden, so wird die Geschwindigkeit durch die Frequenz der Dreiphasen-Wechselspannung vorgegeben. Bei einer Aufnahme eines Läufers in das Magnetfeld wird vorteilhaft der Phasenwinkel des Dreiphasen-Wechselstroms dergestalt korrigiert, dass das Magnetfeld ohne Phasenverschiebung in die Bewegung des Läufers eingepasst wird.

Bei einer vorteilhaften Ausgestaltung des Verfahrens erfolgt die Ermittlung der Ist-Geschwindigkeit mit Hilfe eines Sensors, der dem Segment zugeordnet ist.

Als Sensor ist ein optischer Sensor, ein Hall-Sensor oder ein Sensor geeignet, der auf Magnetostriktion beruht. Der Bereich, in dem der Sensor die Position und/oder die Geschwindigkeit ermitteln kann, ist vorteilhaft nicht auf die Länge des Segments begrenzt. Der Sensor kann in das Segment integriert sein. Der Sensor kann beispielsweise ein Leuchtsignal oder ein Magnetfeld (ausgehend von dem Läufer) zur Ermittlung der Position und/oder der Geschwindigkeit erfassen.

Durch die Zuordnung des Sensors zu dem Segment kann eine eindeutige Zuordnung der ermittelten Ist-Geschwindigkeit oder der ermittelten Position des Läufers auf dem Segment der entsprechenden Steuereinheit bereitgestellt werden.

Bei einer weiteren vorteilhaften Ausgestaltung des Verfahrens wird die Ist-Geschwindigkeit bei der Bewegung auf das Segment ermittelt und anhand der ermittelten Ist-Geschwindigkeit und/oder der Soll-Geschwindigkeit wird der Strom für das Segment bereitgestellt.

Der Strom, insbesondere der Dreiphasen-Wechselstrom, dient zur Erzeugung des Magnetfeldes zur Bewegung des Läufers auf dem Segment. Die Soll-Geschwindigkeit wird gemäß der Aufgabe des Läufers vorgegeben.

Der Strom wird durch die Steuereinheit für das Segment bereitgestellt, welches der Steuereinheit zugeordnet ist. Der Strom wird in Phase und Stärke anhand der Soll-Geschwindigkeit in Bezug zur Ist-Geschwindigkeit des Läufers berechnet, erzeugt und zum Segment übertragen.

Die Vorgabe der Soll-Geschwindigkeit des Läufers erfolgt vorteilhaft anhand eines Bewegungsablaufes, wobei der Bewegungsablauf der Steuereinheit vorgegeben ist. Der Bewegungsablauf kann angeben, wann sich ein Läufer an einem vorgegeben Ort mit welcher Geschwindigkeit bewegen soll.

Durch die Ausgestaltung kann eine schnelle und einfache Regelung der Bewegung des Läufers auf dem Segment erfolgen.

### 2. Vorteilhafte Ausgestaltungen und Weiterbildungen als Gegenstand der abhängigen Ansprüche

Bei einer weiteren vorteilhaften Ausgestaltung der Erfindung, insbesondere des ersten vorgeschlagenen des Verfahrens, wird der Läufer mit Hilfe eines Förderbandes oder eines weiteren Segments auf das Segment bewegt.

Mit dem Förderband oder einem weiteren Segment wird der Läufer auf das Segment bewegt. Der Läufer kann an jedem Punkt des Segments auf das Segment bewegt, insbesondere aufgebracht, werden. Oft wird der Läufer an einem Ende des Segments auf das Segment geschoben, so dass das Magnetfeld des Segments den Läufer aufnehmen kann. Das Magnetfeld passt sich unmittelbar nach der Aufnahme des Läufers durch das Segment der Geschwindigkeit des Läufers an. Erst danach erfolgt eine Änderung der Ist-Geschwindigkeit des Läufers durch eine Anpassung der Ist-Geschwindigkeit an die Soll-Geschwindigkeit.

Durch die vorstehend ausgeführte Ausgestaltung des Verfahrens kann ein Läufer in die Bewegung auf dem Segment eingebracht werden, ohne dass ein Ruck oder eine Beschleunigung den Läufer nachteilhaft beeinflusst.

Bei einer weiteren vorteilhaften Ausgestaltung der Erfindung, insbesondere des zweiten vorgeschlagenen Verfahrens, wird die Ist-Geschwindigkeit des Läufers auf dem Segment ermittelt, wobei die ermittelte Ist-Geschwindigkeit an eine Steuereinheit bereitgestellt wird.

Bei einer weiteren vorteilhaften Ausgestaltung der Erfindung, insbesondere des ersten oder zweiten vorgeschlagenen Verfahrens, wird die Ist-Geschwindigkeit bei der Bewegung ermittelt und anhand der ermittelten Ist-Geschwindigkeit und/oder der Soll-Geschwindigkeit der Strom für das Segment bereitgestellt.

Bei einer weiteren vorteilhaften Ausgestaltung der Erfindung, insbesondere des vorgeschlagenen Verfahrens zum Übergang einer gesteuerten Bewegung eines Läufers in eine geregelte Bewegung des Läufers, werden die folgenden Verfahrensschritte umfasst:
- Bestimmung einer Geschwindigkeit des Läufers auf dem Segment und Ermittlung eines Kommutierungswinkels eines Stromzeigers,
- Ermittlung eines kraftbildenden Stroms des Stromzeigers aus einem [bis unmittelbar vor die Übergabe] vorgegebenen Kommutierungswinkel und dem ermittelten Kommutierungswinkel,
- Regelung der Geschwindigkeit des Läufers mit einem Geschwindigkeits-Regelkreis, wobei der Geschwindigkeits-Regelkreis den Sollwert eines kraftbildenden Stroms für den Strom-Regelkreis vorgibt,
- Vorinitialisierung eines Integralanteils des Geschwindigkeits-Reglers durch den ermittelten kraftbildenden Strom.

Der vorgegebene Kommutierungswinkel wird dabei insbesondere bis unmittelbar vor der Übergabe noch vorgegeben.

Entsprechend weist der Regler für die geregelte Bewegung, der gemäß dem vorgeschlagenen Verfahren vorinitialisiert wird, einen Geschwindigkeits-Regelkreis und einen Strom-Regelkreis auf.

Bei einer weiteren vorteilhaften Ausgestaltung der Erfindung, insbesondere des vorgeschlagenen Verfahrens zum Übergang einer geregelten Bewegung eines Läufers in eine gesteuerte Bewegung des Läufers, werden die folgenden Verfahrensschritte umfasst:
- Bestimmung einer Geschwindigkeit des Läufers auf dem Segment und einer Ermittlung eines Kommutierungswinkels eines Stroms im geregelten Betrieb,
- Regelung der Geschwindigkeit des Läufers mit einem Geschwindigkeits-Regelkreis, wobei der Geschwindigkeits-Regelkreis den Sollwert eines kraftbildenden Stroms für den Strom-Regelkreis vorgibt,
- Vorinitialisierung eines vorgegebenen Kommutierungswinkels aus dem kraftbildenden Strom und dem ermittelten Kommutierungswinkel,
- Steuerung der Geschwindigkeit des Läufers durch Vorgabe des Stromzeigers, der mit einer aus der Soll-Geschwindigkeit ermittelten Frequenz rotiert.

Einige der vorgeschlagenen Verfahrensschritte werden dabei vor dem Übergang, das heißt noch im geregelten Betrieb, vorgenommen und die anderen der vorgeschlagenen Verfahrensschritte während bzw. nach dem Übergang, also in der Regel schon im gesteuerten Betrieb. Noch in der geregelten Bewegung werden die Geschwindigkeit des Läufers bestimmt, der Kommutierungswinkel ermittelt und die Geschwindigkeit geregelt. Während des Übergangs bzw. während der gesteuerten Bewegung werden der vorgegebene Kommutierungswinkel vorinitialisiert und die Geschwindigkeit des Läufers gesteuert.

Bei einer weiteren vorteilhaften Ausgestaltung des Verfahrens weist der Sensor einen Ermittlungsbereich auf, der über das Segment hinausgeht, wobei die Ermittlung der Position des Läufers und/oder die Ermittlung der Ist-Geschwindigkeit des Läufers anhand einer Berechnung eines Mittelwerts erfolgt. Die Berechnung des Mittelwertes kann durch eine Filterung des Signals des Sensors erfolgen.

Die Berechnung des Mittelwerts erfolgt vorteilhaft in der Steuereinheit. Der Mittelwert der Ist-Geschwindigkeit wird durch eine Berechnung von ermittelten Ist-Geschwindigkeiten an Positionen im Ermittlungsbereich des Sensors gebildet, solange der Läufer auf das Segment bewegt wird. Aus mehreren Positionen des Läufers, die in kurzen Zeitabständen ermittelt werden, kann mit Hilfe der Steuereinheit ein Verlauf der Ist-Geschwindigkeit des Läufers berechnet werden. Ein Mittelwert des Verlaufes des Istwertes kann als Grundlage für eine Soll-Geschwindigkeit für den Läufer bei der Aufnahme auf das Segment dienen. Durch eine Mittelung der Ist-Geschwindigkeit über einen Bereich der Bewegung des Läufers bis zur Kopplung des Läufers an das Magnetfeld des Segments kann vorteilhaft die Ist-Geschwindigkeit mit einer höheren Genauigkeit bestimmt werden.

Bei einer vorteilhaften Ausgestaltung des Linearantriebs weist der Linearantrieb zumindest ein Segment, zumindest einen Sensor und zumindest eine Steuereinheit auf, wobei die Steuereinheit dem Segment zugeordnet ist, wobei der Positionssensor dem Segment zugeordnet ist, wobei ein weiteres Segment oder Förderband zur Bewegung eines Läufers auf das Segment vorgesehen ist, wobei der Sensor zur Bestimmung der Ist-Geschwindigkeit des Läufers vorgesehen ist, wobei die Steuereinheit zur Bereitstellung eines Stroms für das Segment ausgebildet ist, wobei der Strom zur Bewegung des Läufers gemäß einer Soll-Geschwindigkeit vorgesehen ist, wobei die Soll-Geschwindigkeit nach der Bewegung des Läufers auf das Segment der Ist-Geschwindigkeit entspricht.

Bei einer alternativen Ausgestaltung des Linearantriebs weist der Linearantrieb zumindest ein Segment und zumindest einen Läufer auf, wobei das Segment insbesondere einen Sensor aufweist, wobei der Linearantrieb einen Regelkreis aufweist und der Regelkreis zur Regelung der Geschwindigkeit des Läufers auf dem Segment ausgebildet ist, wobei bei einem Wechsel einer gesteuerten Bewegung des Läufers zu einer geregelten Bewegung des Läufers das dritte vorgeschlagen Verfahren vorgesehen ist und/oder bei einem Wechsel von der geregelten Bewegung des Läufers zur gesteuerten Bewegung des Läufers das vierte Verfahren vorgesehen ist.

Bei einer weiteren vorteilhaften Ausgestaltung des Linearantriebs weist der Sensor einen Ermittlungsbereich über das Segment hinausgehend auf.

In dieser Ausgestaltung kann der Sensor die Position und/oder die Ist-Geschwindigkeit des Läufers erfassen, obgleich der Läufer noch nicht das Segment erreicht hat. Durch diese Ausgestaltung kann eine besonders genaue Bestimmung der Ist-Geschwindigkeit erfolgen, da die Position und/oder die Ist-Geschwindigkeit vom Anfang des Ermittlungsbereichs an ermittelt werden.

Bei einer weiteren vorteilhaften Ausgestaltung des Linearantriebs weist die Steuereinrichtung einen Stromrichter auf und der Stromrichter ist zur Bereitstellung des Stroms für das Segment vorgesehen.

Der Stromrichter stellt vorteilhaft einen Dreiphasen-Wechselstrom einer einstellbaren Frequenz für das Segment bereit. Die Frequenz des Dreiphasen-Wechselstroms ist proportional zur Soll-Geschwindigkeit des Läufers. Die Phase des Dreiphasen-Wechselstroms wird so gewählt, dass der Läufer synchron in das Magnetfeld eingebracht wird. Durch die Kombination der Steuereinrichtung zur Berechnung der ermittelten Position und/oder Ist-Geschwindigkeit des Läufers mit dem Stromrichter zur Bereitstellung des Stroms für das Segment sind die Übertragungszeiten kurz.

Somit können vorteilhaft eine Berechnung der Soll-Geschwindigkeit und/oder eine Bereitstellung des hierfür notwendigen Stroms in Echtzeit erfolgen.

In einer vorteilhaften Ausgestaltung ist der Linearantrieb zur Durchführung des vorstehend beschriebenen Verfahrens ausgebildet.

Durch die Ausbildung des Linearantriebs kann eine besonders Ruck-freie Bewegung des Läufers erfolgen. Insbesondere bei einem Übergang des Läufers von dem gesteuerten Bereich in den geregelten Bereich und von dem geregelten Bereich in den gesteuerten Bereich, ist die Bewegung des Läufers ohne einen nachteiligen Ruck möglich.

Bei einer vorteilhaften Ausgestaltung des Linearantriebs weist dieser eine Steuereinrichtung auf, wobei die Steuereinrichtung zur Steuerung und/oder Regelung der Bewegung des Läufers ausgebildet ist.

Die Steuereinrichtung führt in Kombination mit den Steuereinheiten zu einer verbesserten Steuerung und/oder Regelung der Bewegung. Die Steuereinrichtung dient zur Kommunikation der Steuereinheiten untereinander. Die Steuereinrichtung kann weiter zur Bereitstellung der Soll-Geschwindigkeit des Läufers an die Steuereinheiten ausgebildet sein. Insbesondere bei einer Bewegung mehrerer Läufer auf dem Linearantrieb und/oder auf einem Segment dient die Steuereinrichtung zur Bereitstellung von Signalen, durch welche die Steuereinheiten eine aufeinander abgestimmte Steuerung und/oder Regelung der Bewegung der Läufer auf dem jeweiligen Segment sicherstellen. Die Steuereirichtung kann auch zur Bereitstellung von Signalen anhand eines vorgesehenen Bewegungsablaufs für einen oder mehrere Läufer ausgebildet sein.

Im gesteuerten Betrieb erfolgt beim Übergang von einem ersten Segment auf ein weiteres Segment, eine Ausrichtung des weiteren Segments anhand eines Betriebszustands des ersten Segments bzw. der jeweilig zugeordneten Steuereinrichtung.

Vorteilhaft kann durch die Kombination einer Steuereinrichtung mit mehreren Steuereinheiten eine vereinfachte Steuerung und/oder Regelung der Bewegung der Läufer ausgebildet sein.

Bei einer weiteren vorteilhaften Ausgestaltung weist der Linearantrieb eine Mehrzahl von Segmenten auf, wobei dem jeweiligen Segmenten eine Steuereinheit zugewiesen ist, wobei die Segmente zumindest teilweise Sensoren aufweisen, wobei die Steuereinrichtung zur Bereitstellung von Signalen für eine Mehrzahl von Steuereinheiten vorgesehen ist, wobei die Steuereinheiten zur Regelung der Ist-Geschwindigkeit des Läufers anhand der Soll-Geschwindigkeit des Läufers ausgebildet ist.

Vorteilhaft sind alle Steuereinheiten zur Regelung der Ist-Geschwindigkeit des Läufers auf deren zugeordneten Segment vorgesehen.

Die Zuordnung einer Steuereinheit zu einem Segment dient der verbesserten Steuerung des Segments. Weiter sind Steuereinheiten käuflich, die sich zum Antrieb eines Segments gut eignen. Beispielhaft eignet sich ein SINAMICS S120 der Firma Siemens AG zur Ansteuerung eines Segments. Steuereinheiten sind weiter vorteilhaft untereinander durch ein Kommunikations-Netzwerk verbunden. Als Kommunikations-Netzwerk kann ein echtzeitfähiges Netzwerk, beispielsweise eine schnelle Netzwerkverbindung (Drive-CLiQ), dienen.

Die Steuereinrichtung dient zur Bereitstellung von Signalen für die Steuereinheiten. Die Steuereinrichtung kann weiter zur Koordinierung der Bewegung der Läufer anhand eines Bewegungsablaufs dienen. Die Steuereinrichtung kann die Bewegung des Läufers von einem Segment auf ein weiteres Segment koordinieren, indem die Signale an die Steuereinheiten ausgegeben werden, die am Übergang beteiligt sind.

Weiter kann die Steuereinrichtung auch zur Initialisierung der einzelnen Funktionen der Steuereinrichtung dienen. Die Steuereinrichtung dient beispielsweise zur zeitweiligen Abschaltung der Geschwindigkeitsregelung der Steuereinheiten des Segments, auf welches ein Läufer bewegt wird.

Als Steuereinrichtung eignet sich eine Bewegungssteuerung, beispielsweise eine SIMOTION-Bewegungssteuerung oder eine SIMATIC-Bewegungssteuerung (jeweils der Firma Siemens AG).

Vorteilhaft kann durch die Koordination der Steuereinheiten über die Steuereinrichtung die Kommunikation verbessert werden und die Fehleranfälligkeit der Steuerung und/oder Regelung reduziert werden.

Anwendung findet die Erfindung vorteilhaft bei einer Verpackungsmaschine, einer Etikettier-Maschine, einer Abfüllanlage, einer Werkzeugmaschine oder einer industriellen Anlage, welche einen hier beschriebenen Linearantrieb einsetzt.

Eine Überführung eines Läufers von einem Segment auf ein Förderband, wobei das Förderband an das Segment angrenzt, erfolgt wie nachstehend beschrieben.

Bei der Umstellung von dem geregelten Betrieb zum gesteuerten Betrieb sind folgende Situationen zu unterscheiden.

Ziel ist jeweils Übergang von der geregelten Bewegung zur gesteuerten Bewegung ohne einen Ruck oder eine unvorhergesehene Beschleunigung des Läufers auf dem Segment auszulösen.

### 3. Überführung eines Läufers von dem Segment auf das Förderband.

Bei einer Bewegung des Läufers im geregelten Betrieb (des Segments oder des Linearantriebs) regelt der Geschwindigkeits-Regelkreis v-RK die Geschwindigkeit zumindest auf eine Fluchtgeschwindigkeit, um den Leiter von einem Segment auf eine Transportstrecke, bspw. auf ein Förderband, zu überführen. Die Fluchtgeschwindigkeit ist so eingestellt, dass der Läufer aufgrund seiner Massenträgheit das Segment verlassen kann und die Potentialbarriere des Magnetfeldes zwischen Segment und Läufer überwinden kann.
Danach folgt eine Deaktivierung des Geschwindigkeits-Regelkreises. Durch die Fluchtgeschwindigkeit wird der Läufer nun passiv auf das Laufband überführt.

### 4. Die Umstellung von einer gesteuerten Bewegung auf eine geregelten Bewegung eines Läufers auf einem Segment.

Das Verfahren zum Übergang von einer gesteuerten Bewegung zu einer geregelten Bewegung erfolgt durch eine Ermittlung eines kraftbildenden Stroms aus dem bis vor die Übergabe vorgegebenen Kommutierungswinkel und dem tatsächlich vorliegenden, ermittelten Kommutierungswinkel. Durch den Geschwindigkeits-Regler wird der kraftbildende Teil des Stroms als Sollwert vorgegeben, wozu ein Integralanteil des Geschwindigkeits-Reglers durch den ermittelten kraftbildenden Strom vorinitialisiert wird. Der Sollwert des kraftbildenden Stroms wird insbesondere wiederum mit einem entsprechenden, gemessenen Istwert verglichen, um schließlich im Stromregler eine passende Spannung zu ermitteln. Beim Übergang in die geregelte Bewegung fließt somit der gleiche kraftbildende Strom wie vor dem Übergang.

Zur Ermittlung des kraftbildenden Teils des Stroms (= kraftbildende Komponente des Stroms, I-q) wird eine Differenz der Kommutierungswinkels ϕ`-ϕ zwischen dem angenommen Kommutierungswinkel ϕ` im gesteuerten Betrieb und dem tatsächlichen Kommutierungswinkel ϕ bestimmt. Dies erfolgt insbesondere im I/f-Betrieb der Stromregelung. Aus den Kommutierungswinkeln ϕ, ϕ`, insbesondere der Differenz der Kommutierungswinkel ϕ`-ϕ, wird der nötige kraftbildende Strom für den geregelten Betrieb bestimmt.

Durch die vorsehenden Maßnahmen kann ein ruckfreier Übergang von der gesteuerten Bewegung zur geregelten Bewegung erfolgen.

Die Umstellung von einer geregelten Bewegung auf eine gesteuerte Bewegung eines Läufers auf einem Segment. Ist Gegenstand des nachfolgenden Abschnittes.

Beim Übergang von der geregelten Bewegung des jeweiligen Läufers zur gesteuerten Bewegung des Läufers erfolgen die Bestimmung der Geschwindigkeit des Läufers und die Ermittlung des Kommutierungswinkels noch im geregelten Betrieb, wozu weiterhin die Geschwindigkeit des Läufers mit einem Geschwindigkeit-Regelkreis geregelt wird. Hierzu gibt der Geschwindigkeit-Regelkreis den Sollwert eines kraftbildenden Stroms für den Strom-Regelkreis vor. Der im I/f-Betrieb angenommenen Kommutierungswinkel ϕ` wird auf Basis des gemessenen Kommutierungswinkels ϕ und des im geregelten Betrieb ermittelten kraftbildenden Strom vorinitialisiert. Somit wird die kraftbildende Stromkomponente bei der geregelten Bewegung zur kraftbildenden Stromkomponente im gesteuerten Betrieb.

Unter einer Vorinitialisierung kann eine Vorgabe eines Wertes als ersten Sollwert für eine Regelung verstanden werden.

Durch die Möglichkeit des Übergangs von einer gesteuerten Bewegung eines Läufers zu einer geregelten Bewegung des Läufers auf einem Segment und umgekehrt kann ein Segment oder ein Linearantrieb bspw. in einen geregelten Teil des Segments bzw. des Linearantriebs und einen gesteuerten Teil des Segments bzw. des Linearantriebs aufgeteilt sein.

Eine Ausgestaltung des Linearantriebs weist zumindest ein Segment und zumindest einen Läufer auf, wobei das Segment einen Sensor aufweist, wobei der Linearantrieb einen Regelkreis aufweist und der Regelkreis zur Regelung der Geschwindigkeit des Läufers auf dem Segment ausgebildet ist, wobei bei einem Wechsel einer gesteuerten Bewegung des Läufers zu einer geregelten Bewegung des Läufers das vorstehend ausgeführte Verfahren vorgesehen ist und/oder bei einem Wechsel von der geregelten Bewegung des Läufers zur gesteuerten Bewegung des Läufers das anderen vorstehend ausgeführte Verfahren vorgesehen ist.

Ein Regelkreis ist vorteilhaft in der Steuereinheit und/oder der Steuereinrichtung integriert. Ein Regelkreis umfasst vorteilhaft einen Strom-Regelkreis, einen Geschwindigkeits-Regelkreis und einen Positions-Regelkreis. Hierbei ist der Positions-Regelkreis zur Regelung der Position des Läufers auf dem jeweiligen Segment oder einer Mehrzahl von Segmenten ausgebildet. Weiter ist der Geschwindigkeits-Regelkreis zur Regelung der Geschwindigkeit des Läufers auf dem jeweiligen Segment oder einer Mehrzahl von Segmenten ausgebildet. Weiter ist der Strom-Regelkreis zur Regelung des Stroms für das Segment ausgebildet. Vorteilhaft ist der Strom-Regelkreis während des Betriebs des Linearantriebs aktiviert. Der Geschwindigkeits-Regelkreis ist vorzugsweise dann aktiviert, wenn der zumindest eine Läufer auf dem Segment oder einer Mehrzahl von Segmenten in einem geregelten Betrieb vorliegt.

Die Regelung der Position ist vorzugsweise dann aktiv, falls die Position des Läufers eine hervorgehobene Rolle spielt. Die Regelkreise können aufeinander aufbauen, so dass der Geschwindigkeits-Regelkreis auf den Stromregelkreis zugreift und/oder diesen mit einem Sollwert beaufschlagen kann. Weiter kann der Positions-Regelkreis dem Geschwindigkeits-Regelkreis einen Sollwert vorgibt oder in dessen Funktion eingreift.

Der Regelkreis ist jeweils vorteilhaft als P-Regler, PI-Regler und/oder als PID-Regler ausgestaltet.

Hier wird eine Regelung der Geschwindigkeit des Läufers beschrieben. Der Läufer weist eine Geschwindigkeit auf, die als Ist-Geschwindigkeit bezeichnet wird. Die Geschwindigkeit (als Regelgröße) des Läufers wird als Ist-Geschwindigkeit bezeichnet. Mit Hilfe des Sensors wird diese Ist-Geschwindigkeit gemessen.

Im Folgenden wird eine gesteuerte bzw. geregelte Bewegung des Läufers synonym mit einem gesteuerten bzw. einem geregelten Betrieb verwendet.

Im Folgenden wird die Erfindung anhand der Figuren näher beschrieben und erläutert. Dabei können die in den Figuren gezeigten Merkmale der Erfindung zu neuen Ausführungsbeispielen kombiniert werden, ohne das Wesen der Erfindung zu verlassen. Es zeigen:
- FIG 1: einen Linearantrieb mit einem Förderband,
- FIG 2: sequenziell aufeinanderfolgende Segmente,
- FIG 3: Segmente und einen Sensor,
- FIG 4: ein Stromdiagramm,
- FIG 5: ein Verfahren zur Regelung der Ist-Geschwindigkeit des Läufers auf einem Segment
- FIG 6: zeigt einen Regelkreis,
- FIG 7: zeigt eine schematische Darstellung einer Ausgestaltung des dritten vorgeschlagenen Verfahrens und
- FIG 8: zeigt eine schematische Darstellung einer Ausgestaltung des vierten vorgeschlagenen Verfahrens.

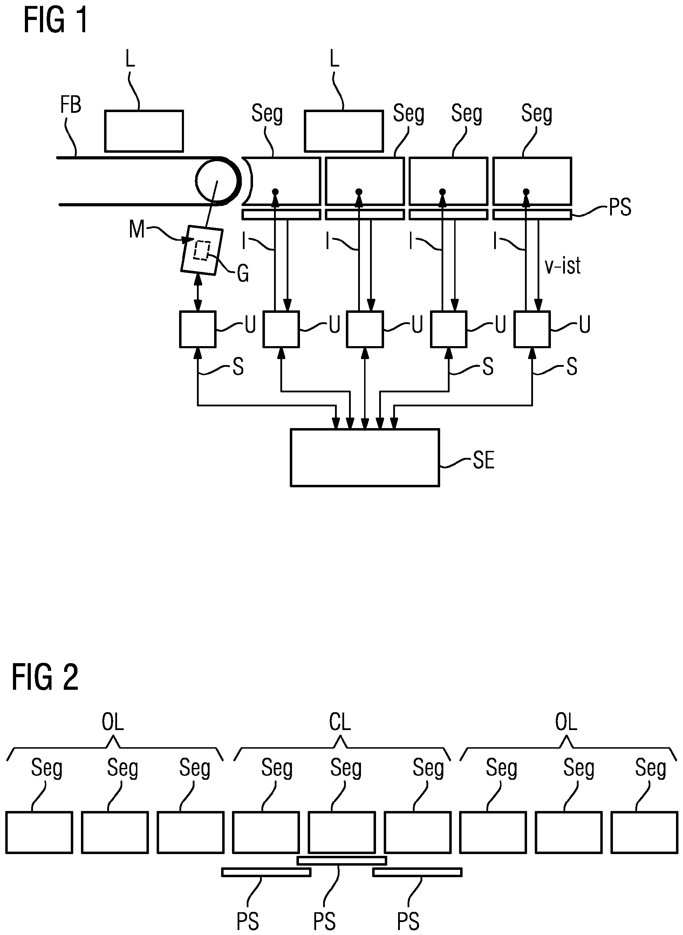

FIG 1 zeigt einen Linearantrieb LA mit einem Förderband FB. Das Förderband FB dient zur Bereitstellung eines Läufers L für die Segmente Seg, wobei die Segmente und das Förderband nebeneinander angeordnet sind. Das Förderband FB weist zur Bewegung einen Motor M auf, wobei der Motor M durch eine Steuereinheit U gesteuert wird. Neben dem Förderband FB sind Segmente Seg angeordnet, wobei die Segmente Seg jeweils mit einer Steuereinheit U verbunden sind. Den Segmenten Seg ist jeweils ein Sensor PS zugeordnet. Der Sensor PS dient zur Ermittlung der Position und/oder der Ist-Geschwindigkeit v-ist des Läufers L auf dem Segment Seg, dem der Sensor PS zugeordnet ist. Der Sensor PS ist jeweils mit der Steuereinheit U verbunden, die dem Segment Seg zugeordnet ist. In einer vorteilhaften Ausgestaltung ist der Sensor PS in das Segment Seg integriert.

Die Steuereinheiten U sind mit einer Steuereinrichtung SE verbunden. Die Steuereinrichtung SE dient zur Bereitstellung von Signalen S für die jeweilige Steuereinheit U. In der hier gezeigten Ausführung können die Segmente Seg als Primärelemente von Linearmotoren ausgeführt sein. Die Steuereinheit U ist jeweils als Umrichter oder Stromrichter ausgeführt. Die Steuereinheit U dient zur Spannungsversorgung bzw. Stromversorgung der Segmente Seg. Der Strom I für die Segmente Seg dient zur Erzeugung eines Magnetfeldes durch Spulen des Segments Seg. Das Magnetfeld dient zur Positionierung des Läufers L auf dem Segment Seg. Der Läufer L wird regelmäßig über eine Mehrzahl von Segmenten Seg bewegt. Die Segmente Seg und die Sensoren PS bilden einen geregelten Bereich CL (von Closed Loop). Der Motor M kann mit einem Geber G ausgestattet sein. Der optionale Geber G des Motors dient zur Sicherstellung der ordnungsgemäßen Funktion des Motors M und damit des Förderbandes FB. Falls ein Läufer L auf ein Segment Seg bewegt wird, beispielsweise durch das Förderband FB oder von einem benachbarten Segment Seg aus, dient der Sensor PS zur Ermittlung der Ist-Geschwindigkeit v-ist des Läufers. Die Ist-Geschwindigkeit v-ist wird bei der Bewegung des Läufers L auf das Segment Seg ermittelt. Die Ist-Geschwindigkeit v-ist wird der Steuereinheit U bereitgestellt. Der Steuereinheit U dient die Ist-Geschwindigkeit v-ist des Läufers L als Eingangsgröße zur Regelung der Ist-Geschwindigkeit v-ist des Läufers L auf dem Segment Seg, welches der Steuereinheit U zugeordnet ist. Die Ist-Geschwindigkeit v-ist wird vom Sensor PS an die Steuereinheit U übertragen.

Durch die hier gezeigte Ausführung kann beispielsweise ein Läufer von einem gesteuerten Bereich OL (von Open Loop) zu einem geregelten Bereich CL bewegt werden.

FIG 2 zeigt sequentiell aufeinander folgende Segmente Seg. Die Segmente Seg weisen zum Teil Sensoren PS auf. Die Sensoren PS weisen einen Ermittlungsbereich auf, der über die Grenzen des Segments Seg hinaus ragt. Der Bereich, in dem den Segmenten Seg ein Sensor PS zugeordnet ist, wird als geregelter Bereich CL bezeichnet. Segmente Seg, die keinen Sensor PS aufweisen bzw. denen kein Sensor PS zugeordnet ist, werden als gesteuerter Bereich OL bezeichnet.

Die Bewegung des Läufers, insbesondere die Ist-Geschwindigkeit v-ist des Läufers L, wird im gesteuerten Bereich OL lediglich durch eine Vorgabe an die Steuereinheit U gesteuert.

Die Bewegung des Läufers L, insbesondere die Ist-Geschwindigkeit v-ist des Läufers L, wird im geregelten Bereich CL anhand der ermittelten Ist-Geschwindigkeit geregelt.

Die Regelung der Ist-Geschwindigkeit v-ist erfolgt in der Steuereinrichtung SE und/oder in der Steuereinheit U.

Sowohl die Segmente Seg des geregelten Bereichs CL als auch die Segmente Seg des gesteuerten Bereichs OL dienen zur Bewegung des Läufers L. Die Sensoren PS sind beispielsweise als optische Sensoren, Hall-Sensoren oder Magnetostriktions-Sensoren ausgebildet. Sensoren PS, die lediglich zur Ermittlung der Position des Läufers L ausgebildet sind, können eine Mehrzahl von ermittelten Positionen eines Läufers an die Steuereinheit U übertragen. Die Steuereinheit U berechnet aus der Mehrzahl der Positionen des Läufers L und der Zeit der Übertragung die Ist-Geschwindigkeit des Läufers L.

Die Berechnung der Ist-Geschwindigkeit v-ist des Läufers L erfolgt danach in der Steuereinheit U oder in der Steuereinrichtung SE. Anhand der Ist-Geschwindigkeit v-ist erfolgt eine Regelung der Ist-Geschwindigkeit v-ist des Läufers L, insbesondere beim Übergang eines Läufers L von einem Segment Seg zu einem weiteren Segment Seg.

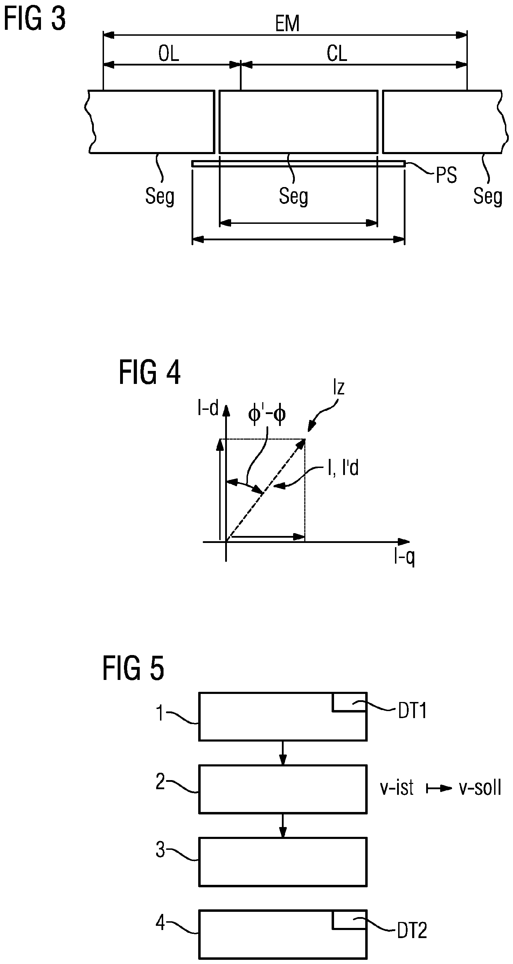

FIG 3 zeigt Segmente Seg und einen Sensor PS. Der Sensor PS des mittleren Segments Seg weist einen Ermittlungsbereich auf, der größer als die Länge des Segments Seg ist. Der Ermittlungsbereich des Sensors PS verläuft über die gesamte Länge des Sensors PS wie unterhalb des Sensors durch den Pfeil symbolisiert.

FIG 4 zeigt ein Stromdiagramm. Das Stromdiagramm zeigt die kraftbildende Komponente I-q des Stroms und die feldbildende Komponente I-d des Stroms und den Kommutierungswinkel ϕ beziehungsweise die Differenz ϕ`-ϕ zwischen dem angenommenen Kommutierungswinkel ϕ` und dem tatsächlichen Kommutierungswinkel ϕ. Der Kommutierungswinkel ϕ gibt die (tatsächliche) Richtung eines Stromzeigers Iz vor. Die Differenz ϕ' -ϕ gibt den Winkel zwischen der vorgesehenen feldbildenden Komponente des Stroms I-d' und der im tatsächlich vorliegenden feldbildenden Komponente des Stroms I-d. Der angenommene Kommutierungswinkel ϕ' kann bei der gesteuerten Bewegung des Läufers (L) durch die Steuereinheit U vorgegeben sein.

Soll ein Übergang von einer gesteuerten Bewegung des Läufers (L) und einer geregelten Bewegung des Läufers (L) erfolgen, so ist kraftbildende Anteil des Strom I-q anhand der Differenz des angenommenen Kommutierungswinkels ϕ' und dem tatsächlichen Kommutierungswinkel ϕ vorzuinitialisieren. Dann ist die Änderung der kraftbildenden Komponente des Stroms Null und es findet kein Kraftstoß auf den Läufer während des Übergangs von der geregelten Bewegung zur gesteuerten Bewegung statt.

Dass selbe gilt in umgekehrter Art und Weise für den Übergang von der geregelten Bewegung des Läufers L zur gesteuerten Bewegung des Läufers L. Hier wird der angenommene Kommutierungswinkel ϕ' für den I/f-gesteuerten Betrieb so vorinitialisiert, dass der kraftbildende Anteil des Strom I-q konstant bleibt.

Im geregelten Betrieb wird der Kommutierungswinkel ϕ entweder gemessen oder durch ein Modell (anhand der Antriebsparameter) berechnet.

FIG 5 zeigt ein Verfahren zur Regelung der Ist-Geschwindigkeit v-ist des Läufers L auf einem Segment Seg. In einem ersten Schritt 1 wird der Läufer L auf das Segment Seg bewegt. Der erste Schritt 1 erfolgt in einem ersten Zeitbereich DT1. Entweder wird der Läufer L von einem Förderband FB oder von einem weiteren Segment Seg auf das Segment Seg bewegt. In einem zweiten Schritt wird die Ist-Geschwindigkeit v-ist des Läufers L bei der Bewegung des Läufers L auf das Segment Seg ermittelt. Im ersten Zeitbereich DT1 ist die Regelung der Ist-Geschwindigkeit v-ist noch nicht aktiviert. Die ermittelte Ist-Geschwindigkeit v-ist des Läufers L wird zur Steuereinheit U und/oder zur Steuereinrichtung SE übertragen. Die Steuereinheit U oder die Steuereinrichtung SE nimmt die ermittelte Ist-Geschwindigkeit des Läufers auf. Die ermittelte Ist-Geschwindigkeit v-ist dient als Grundlage für die Festlegung der Soll-Geschwindigkeit v-soll in der Ist-Geschwindigkeits-Regelung. Im zweiten Verfahrensschritt 2 wird die Soll-Geschwindigkeit v-soll als die ermittelte Ist-Geschwindigkeit gesetzt. In einem dritten Verfahrensschritt 3 wird im Anschluss an den ersten Zeitbereich DT1 die Regelung der Ist-Geschwindigkeit v-ist des Läufers L aktiviert.

In einem vierten Verfahrensschritt wird der Läufer wieder auf ein weiteres Segment Seg oder auf ein Förderband FB bewegt.

Falls dem weiteren Segment Seg ebenfalls ein Sensor PS zugeordnet ist, so können die vorstehend beschriebenen Verfahrensschritte 1, 2 und 3 wiederholt ablaufen.

Falls dem weiteren Segment Seg oder dem Förderband FB kein Sensor PS zugeordnet ist, erfolgt die Ermittlung der Ist-Geschwindigkeit im zweiten Zeitbereich DT2 mit Hilfe des Sensors des Segments Seg, von dem der Läufer auf das weitere Segment oder Förderband bewegt wird. Hierfür ist es vorteilhaft, wenn der Ermittlungsbereich des Sensors PS über das Ende des Segments Seg hinausragt.

Die ermittelte Ist-Geschwindigkeit v-ist des Segments wird in diesem Fall an die Steuereinheit U übertragen, welche dem weiteren Segment Seg oder dem Förderband FB zugeordnet ist. Die Steuereinheit U, die dem weiteren Segment Seg oder dem Förderband FB zugeordnet ist, setzt die Ist-Geschwindigkeit v-ist des Läufers am Ende des Segments Seg als neue Sollgeschwindigkeit v-soll des Läufers L auf dem weiteren Segment Seg oder auf dem Förderband FB. Anhand der neuen Sollgeschwindigkeit v-soll erfolgt die Steuerung der Bewegung des Läufers L auf dem weiteren Segment Seg oder dem Förderband FB.

Vorteilhaft ist eine Ermittlung der Ist-Geschwindigkeit an mehreren Punkten, insbesondere zu einer Mehrzahl von Zeitpunkten innerhalb des ersten Zeitbereichs DT1 und/oder des zweiten Zeitbereichs DT2.

Bei einer Bewegung mehrerer Läufer nacheinander auf das Segment Seg ist das vorstehend beschriebene Verfahren anwendbar. Gegebenenfalls muss dazu der erste Zeitbereich DT1 und/oder der zweite Zeitbereich DT2 verkürzt werden.

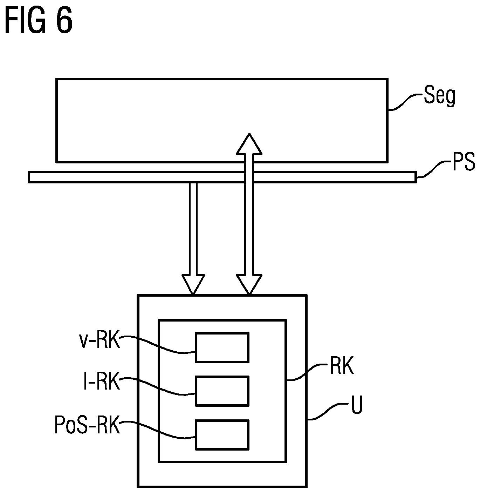

FIG 6 zeigt ein Segment Seg und eine Steuereinheit U mit einem Regelkreis RK. Das Segment Seg weist einen Sensor PS auf. Der Sensor PS ist zur Ermittlung der Geschwindigkeit des Läufers L und/oder zur Ermittlung der Position des Läufers L auf dem Segment Seg ausgebildet. Der Sensor PS stellt die ermittelte Position des Läufers L und/oder die ermittelte Geschwindigkeit des Läufers L dem Regelkreis RK bereit. Der Regelkreis RK ist hier in der Steuereinheit U integriert. Der Steuerkreis RK kann auch zumindest teilweise in der Steuereinrichtung SE des Linearantriebs LA integriert sein. Das Segment Seg in Verbindung mit dem Läufer L und der Steuereinheit U kann sich entweder im gesteuerten Betrieb OL oder im geregelten Betrieb CL befinden.

Der Regelkreis RK weist einen Strom-Regelkreis I-RK, einen Geschwindigkeits-Regelkreis v-RK und einen Positions-Regelkreis Pos-RK auf. Der Strom-Regelkreis I-RK dient zur Regelung des Stroms zur Stromversorgung des Segments Seg. Der Geschwindigkeits-Regelkreis v-RK dient zur Regelung der Geschwindigkeit des Läufers L auf dem Segment Seg. Der Positions-Regelkreis Pos-RK ist zur Regelung der Position des Läufers L auf dem Segment Seg ausgebildet.

Im geregelten Betrieb CL der Bewegung des Läufers L auf dem Segment Seg ist der Geschwindigkeits-Regelkreis v-RK aktiviert. Im aktivierten Zustand des Geschwindigkeits-Regelkreises v-RK dient der Sensor PS zur Bereitstellung des Istwertes der Geschwindigkeit des Läufers L auf dem Segment Seg.

Bei einem Umschalten von dem gesteuerten Betrieb OL zum geregelten Betrieb CL wird der Geschwindigkeits-Regelkreis v-RK deaktiviert. Der Strom-Regelkreis I-RK bleibt jedoch auch im gesteuerten Betrieb OL aktiviert. Der Strom-Regelkreis I-RK erhält seinen Sollwert durch den Geschwindigkeits-Regelkreis v-RK oder von der Steuereinrichtung SE.

Im geregelten Betrieb gibt vorteilhaft der Geschwindigkeits-Regelkreis v-RK den zumindest einen Sollwert (z. B. eines Stroms) für den Strom-Regelkreis I-RK vor.

Der Stromregelkreis I-RK ist vorteilhaft zur Regelung des Stroms I-q, I-d in seiner feldbildenden Komponente I-d, seiner kraftbildenden Komponente I-q und somit zur Vorgabe und/oder Ermittlung, insbesondere Messung oder Berechnung, des Kommutierungswinkels ϕ, ϕ' vorgesehen.

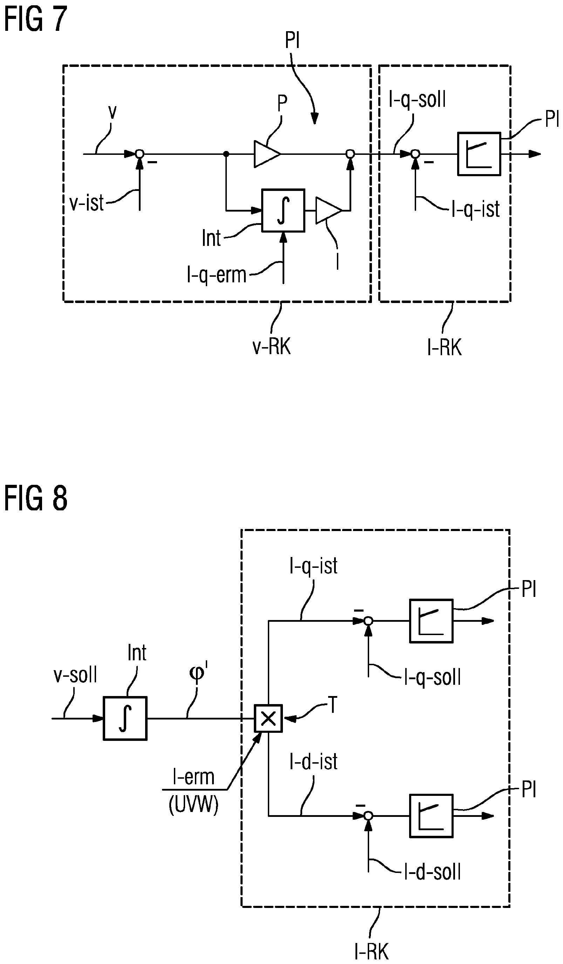

FIG 7 zeigt eine schematische Darstellung einer Ausgestaltung des dritten vorgeschlagenen Verfahrens. Zum Übergang einer gesteuerten Bewegung OL eines Läufers L in eine geregelte Bewegung CL des Läufers L wird ein Regler v-RK, I-RK für die geregelte Bewegung CL derart vor initialisiert, dass der Übergang im Wesentlichen ruckfrei vollzogen wird.

Hierzu wird zunächst eine Geschwindigkeit v-ist des Läufers L auf dem Segment Seg bestimmt und ein Kommutierungswinkel ϕ eines Stromzeigers I ermittelt. Ein kraftbildender Strom I-q-erm des Stromzeigers Iz wird aus einem bis unmittelbar vor die Übergabe angenommenen Kommutierungswinkel ϕ' und dem ermittelten Kommutierungswinkel ϕ ermittelt, wobei dieser kraftbildende Strom I-q-erm zur vor Initialisierung eines Integralteils des Geschwindigkeits-Regler v-RK verwendet wird.

In der FIG 7 ist eine Möglichkeit der Ausgestaltung wird eine Differenz aus der Soll-Geschwindigkeit v-soll mit der Ist-Geschwindigkeit v-ist gebildet. Die Geschwindigkeitsdifferenz wird an einen PI-Regler überführt. Der PI-Regler weist in einem Ast ein Integrationsglied Int und einen Integralverstärker I auf. Der PI-Regler weist im anderen Ast einen Proportionalverstärker P auf. Das Integrationsglied Int weist als zusätzliche Eingangsgröße den ermittelten kraftbildenden Anteil des Stroms I-q-erm auf. Der ermittelte kraftbildende Anteil des Stroms I-q-erm dient insbesondere zur Festlegung des Anfangswerts des Ausgangs des Integrationswert.

Die Ausgänge der beiden Äste werden zum Sollwert der kraftbildenden Komponente des Stroms I-q-soll addiert.

Zur Regelung der Geschwindigkeit v ermittelt der Geschwindigkeits-Regelkreis v-RK somit den Sollwert eines kraftbildenden Stroms I-q-soll. Der Sollwert des kraftbildenden Stroms I-q-soll wird dem Strom-Regelkreis I-RK zugeführt. Der Strom-Regelkreis I-RK ermittelt schließlich eine passende Spannung, wozu ggf. ein gemessener kraftbildender Strom I-q-ist verwendet wird. Die Spannung wird der entsprechende Steuereinheit U und oder der Steuereinrichtung SE bereitgestellt.

FIG 8 zeigt eine schematische Darstellung einer Ausgestaltung des vierten vorgeschlagenen Verfahrens. Zum Übergang einer geregelten Bewegung CL eines Läufers L in eine gesteuerte Bewegung OL des Läufers L wird ein angenommener Kommutierungswinkel ϕ' für die gesteuerte Bewegung derart vorinitialisiert, dass der Übergang im Wesentlichen ruckfrei vollzogen wird.

Hierzu wird aus der Sollgeschwindigkeit v-soll der angenommene Kommutierungswinkel ϕ' ermittelt. Eine Ermittlung des angenommenen Kommutierungswinkels ϕ' erfolgt insbesondere mit Hilfe mittels Integration der Sollgeschwindigkeit. Der angenommene Kommutierungswinkel ϕ' wird dem Stromregelkreis I-RK zugeführt. Der Stromregelkreis weist als weitere Eingangsgröße den ermittelten (Dreiphasenwechsel-) Strom I-erm auf. Zur Kennzeichnung, dass der ermittelte Strom I-erm ein Dreiphasenwechselstrom ist, dient die Angabe (U V W). Mit Hilfe des angenommenen Kommutierungswinkels ϕ' wird aus dem Strom I-erm mit Hilfe eines Stromteilers T in den Ist-Wert des feldbildenden Anteils des Stroms I-d-ist und den Ist-Wert des kraftbildenden Anteils des Stroms I-q-ist aufgeteilt.

Der jeweilige Ist-Wert der Stroms I-q-ist, I-d-ist wird mit dem entsprechenden Sollwert I-q-soll, I-d-soll verglichen. Die Differenz der entsprechenden Stromwerte dient jeweils als Eingangsgrößen für jeweils einen PI-Regler (Proportional-Integral-Regler) PI. Die Ausgänge der PI-Regler PI dienen vorteilhaft als Eingangsgrößen für die jeweilige Steuereinheit U.

Die Ausgänge des jeweiligen PI-Reglers können vorteilhaft mit Hilfe eines (nicht gezeigten) Transformationsgliedes in Spannungen gewandelt werden. Die Spannungen werden dann vorteilhaft an die Steuereinheiten übertragen und dienen zur Vorgabe der Versorgungsspannung für das jeweilige Segment Seg.

Mit anderen Worten wird zunächst eine Geschwindigkeit v-soll aus der geregelten Bewegung eines Läufers L ermittelt. Zur Ermittlung der geregelten Bewegung CL wird eine Geschwindigkeit v-ist des Läufers L auf dem Segment Seg bestimmt. Weiter wird und der angenommene Kommutierungswinkel ϕ eines Stroms I ermittelt. Dabei gibt während der geregelten Bewegung CL ein Geschwindigkeits-Regelkreis v-RK den Sollwert eines kraftbildenden Stroms I-q für den Strom-Regelkreis I-RK vor. Zum Übergang in die gesteuerte Bewegung wird der angenommene Kommutierungswinkel ϕ' aus dem kraftbildenden Strom I-q und dem ermittelten Kommutierungswinkel ϕ vorinitialisiert, wobei eine Steuerung der Geschwindigkeit des Läufers L durch Vorgabe des Stromzeigers I vorgenommen wird und die Komponenten I-q und I-d des Stromzeigers (Iz, siehe FIG 4) anhand eines Strom-Regelkreis I-RK ermittelt werden.

Zusammenfassend betrifft die Erfindung u. a. ein Verfahren zur Bewegung eines Läufers L auf einem Segment Seg, einen Linearantrieb LA, eine Produktionsmaschine, eine Werkzeugmaschine und eine Verpackungsmaschine mit einem solchen Linearantrieb LA.

## Patentansprüche

1. Verfahren zum Übergang einer gesteuerten Bewegung eines Läufers (L) in eine geregelte Bewegung des Läufers (L) auf einem Segment (Seg) eines Linearantriebs (LA),
wobei der Linearantrieb (LA) Segmente (Seg) und zumindest einen Läufer (L) aufweist,
wobei der Läufer (L) zur Bewegung auf dem Segment (Seg) ausgebildet ist,
wobei bei einem Wechsel von der gesteuerten Bewegung zur geregelten Bewegung ein Regler für die geregelte Bewegung derart vorinitialisiert wird, dass der Übergang im Wesentlichen ruckfrei vollzogen wird,
- wobei das Segment (Seg) zur Bewegung des Läufers (L) auf dem Segment (Seg) entlang einer Richtung dient, wobei die Bewegung von einem Magnetfeld initiiert wird, wobei das Magnetfeld mit Hilfe von Spulen des Segments (Seg) durch einen Strom erzeugt wird, wobei der Strom durch eine einem Segment (Seg) zugeordnete Steuereinheit bereitgestellt wird;
umfassend die folgenden Verfahrensschritte:
- Bestimmung einer Geschwindigkeit (v-ist) des Läufers (L) auf dem Segment (Seg) und Ermittlung eines Kommutierungswinkels (ϕ) eines Stromzeigers (I-d, I-q, I) des Stroms,
- Ermittlung eines kraftbildenden Stroms (I-q-erm) des Stromzeigers (I) im gesteuerten Betrieb aus einem vorgegebenen Kommutierungswinkel (ϕ`) und dem ermittelten Kommutierungswinkel (ϕ), wobei der vorgegebene Kommutierungswinkel (ϕ`) bis unmittelbar vor dem Übergang im gesteuerten Betrieb vorgegeben wird, wobei zur Ermittlung des kraftbildenden Stroms eine Differenz zwischen dem vorgegebenen Kommutierungswinkels (ϕ`) und dem ermittelten Kommutierungswinkel (ϕ) bestimmt wird;
- Regelung der Geschwindigkeit (v) des Läufers (L) mit einem Geschwindigkeits-Regelkreis (v-RK), wobei der Geschwindigkeits-Regelkreis (v-RK) einen Sollwert des kraftbildenden Stroms (I-q-soll) für einen Strom-Regelkreis (I-RK) vorgibt,
- Vorinitialisierung eines Integralanteils des Geschwindigkeits-Reglers (v-RK) durch den im gesteuerten Betrieb ermittelten kraftbildenden Strom (I-q-erm).

2. Verfahren zum Übergang einer geregelten Bewegung eines Läufers (L) in eine gesteuerte Bewegung des Läufers (L) auf einem Segment (Seg) eines Linearantriebs (LA),
wobei der Linearantrieb (LA) Segmente (Seg) und zumindest einen Läufer (L) aufweist,
wobei der Läufer (L) zur Bewegung auf dem Segment (Seg) ausgebildet ist,
wobei bei dem Übergang von der geregelten Bewegung zur gesteuerten Bewegung ein vorgegebener Kommutierungswinkel (ϕ`) für die gesteuerte Bewegung derart vorinitialisiert wird, dass der Übergang im Wesentlichen ruckfrei vollzogen wird,
- wobei das Segment (Seg) zur Bewegung des Läufers (L) auf dem Segment (Seg) entlang einer Richtung dient, wobei die Bewegung von einem Magnetfeld initiiert wird, wobei das Magnetfeld mit Hilfe von Spulen des Segments (Seg) durch einen Strom erzeugt wird, wobei der Strom durch eine einem Segment (Seg) zugeordnete Steuereinheit bereitgestellt wird;
umfassend die folgenden Verfahrensschritte:
- Bestimmung einer Geschwindigkeit (v-ist) des Läufers (L) auf dem Segment (Seg) und Ermittlung eines Kommutierungswinkels (ϕ) des Stroms (I-d, I-q, I) im geregelten Betrieb,
- Regelung der Geschwindigkeit (v) des Läufers (L) mit einem Geschwindigkeits-Regelkreis (v-RK), wobei der Geschwindigkeits-Regelkreis (v-RK) einen kraftbildenden Strom (I-q) als Sollwert für einen Strom-Regelkreis (I-RK) vorgibt,
- Vorinitialisierung des vorgegebenen Kommutierungswinkels (ϕ`) aus dem kraftbildenden Strom (I-q) und dem ermittelten Kommutierungswinkel (ϕ),
- Steuerung der Geschwindigkeit des Läufers durch Vorgabe eines Stromzeigers (Iz), der mit einer aus einer Soll-Geschwindigkeit (v-soll) ermittelten Frequenz rotiert.

3. Verfahren nach einem der Ansprüche 1 oder 2,
wobei die Bestimmung der Geschwindigkeit (v-ist) des Läufers (L) mit Hilfe eines Sensors (PS) erfolgt, der dem Segment (Seg) zugeordnet ist.

4. Verfahren nach Anspruch 3,
wobei der Sensor (PS) einen Ermittlungsbereich aufweist, der über das Segment (Seg) hinausgeht, wobei eine Ermittlung einer Position des Läufers (L) und/oder die Bestimmung der Geschwindigkeit (v-ist) des Läufers (L) durch die Berechnung eines Mittelwerts erfolgt.

5. Linearantrieb (LA), aufweisend zumindest ein Segment (Seg) und zumindest einen Läufer, wobei das Segment (Seg) einen Sensor (PS) aufweist, wobei der Linearantrieb einen Regelkreis aufweist und der Regelkreis zur Regelung der Geschwindigkeit des Läufers (L) auf dem Segment (Seg) ausgebildet ist, wobei bei einem Wechsel einer gesteuerten Bewegung des Läufers (L) zu einer geregelten Bewegung des Läufers (L) ein Verfahren zumindest nach Anspruch 1 vorgesehen ist und/oder bei einem Wechsel von der geregelten Bewegung des Läufers (L) zur gesteuerten Bewegung des Läufers (L) ein Verfahren zumindest nach Anspruch 2 vorgesehen ist.

6. **Linearantrieb (LA) nach Anspruch 5,** wobei der Sensor (PS) einen Ermittlungsbereich über das Segment (Seg) hinausgehend aufweist.

7. **Linearantrieb (LA) nach Anspruch 5 oder 6,** weiter aufweisend eine Steuereinrichtung (SE), wobei die Steuereinrichtung (SE) zur Steuerung und/oder Regelung der Bewegung des Läufers (L) ausgebildet ist.

8. Produktionsmaschine, Werkzeugmaschine oder Verpackungsmaschine, aufweisend einen Linearantrieb (LA) nach einem der Ansprüche 5 bis 7

## Claims

1. Method to transfer a controlled movement of a rotor (L) into a regulated movement of the rotor (L) on a segment (Seg) of a linear drive (LA),
wherein the linear drive (LA) has segments (Seg) and at least one rotor (L),
wherein the rotor (L) is designed to move on the segment (Seg), wherein, when changing from the controlled movement to the regulated movement, a controller is pre-initialized for the regulated movement in such a way that the transfer is primarily performed free of jerking,
- wherein the segment (Seg) is used to move the rotor (L) on the segment (Seg) along a direction, wherein the movement is initiated by a magnetic field, wherein the magnetic field is generated with the aid of coils of the segment (Seg) by means of an electric current, wherein the electric current is provided by a control unit paired with a segment (Seg);
comprising the following method steps:
- determining a speed (v-ist) of the rotor (L) on the segment (Seg) and ascertaining a commutation angle (ϕ) of an electric-current indicator (I-d, I-q, I) of the electric current,
- ascertaining a force-forming electric current (I-q-erm) of the electric-current indicator (I) in controlled mode from a specified commutation angle (ϕ') and the ascertained commutation angle (ϕ), wherein the specified commutation angle (ϕ') is specified up to directly prior to the transfer in controlled mode, wherein a difference between the specified commutation angle (ϕ') and the ascertained commutation angle (ϕ) is determined in order to ascertain the force-forming electric current;
- regulating the speed (v) of the rotor (L) using a speed control circuit (v-RK), wherein the speed control circuit (v-RK) specifies a target value of the force-forming electric current (I-q-soll) for an electric current control circuit (IRK) ,
- pre-initializing an integral part of the speed controller (v-RK) by means of the force-forming electric current (I-q-erm) ascertained in controlled mode.

2. Method to transfer a regulated movement of a rotor (L) into a controlled movement of the rotor (L) on a segment (Seg) of a linear drive (LA),
wherein the linear drive (LA) has segments (Seg) and at least one rotor (L),
wherein the rotor (L) is designed to move on the segment (Seg), wherein, when transferring from the regulated movement to the controlled movement, a specified commutation angle (ϕ') for the controlled movement is pre-initialized in such a way that the transfer is primarily performed free of jerking,
- wherein the segment (Seg) is used to move the rotor (L) on the segment (Seg) along a direction, wherein the movement is initiated by a magnetic field, wherein the magnetic field is generated with the aid of coils of the segment (Seg) by means of an electric current, wherein the electric current is provided by a control unit paired with a segment (Seg);
comprising the following method steps:
- determining a speed (v-ist) of the rotor (L) on the segment (Seg) and ascertaining a commutation angle (ϕ) of the electric current (I-d, I-q, I) in regulated mode,
- regulating the speed (v) of the rotor (L) using a speed control circuit (v-RK), wherein the speed control circuit (v-RK) specifies a force-forming electric current (I-q) as a target value for an electric current control circuit (I-RK),
- pre-initializing the specified commutation angle (ϕ') from the force-forming electric current (I-q) and the ascertained commutation angle (ϕ) ,
- controlling the speed of the rotor by specifying an electric-current indicator (Iz), which rotates with a frequency ascertained from a target speed (v-soll).

3. Method according to either of Claims 1 and 2,
wherein the determination of the speed (v-ist) of the rotor (L) takes place with the aid of a sensor (PS), which is paired with the segment (Seg).

4. Method according to Claim 3,
wherein the sensor (PS) has a detection range that goes beyond the segment (Seg), wherein an ascertainment of a position of the rotor (L) and/or the determination of the speed (v-ist) of the rotor (L) takes place by means of the calculation of an average value.

5. Linear drive (LA),
comprising at least one segment (Seg) and at least one rotor, wherein the segment (Seg) has a sensor (PS), wherein the linear drive has a control circuit and the control circuit is designed to regulate the speed of the rotor (L) on the segment (Seg), wherein a method at least according to Claim 1 is provided for a change of a controlled movement of the rotor (L) to a regulated movement of the rotor (L) and/or a method at least according to Claim 2 is provided for a change from the regulated movement of the rotor (L) to the controlled movement of the rotor (L).

6. Linear drive (LA) according to Claim 5,
wherein the sensor (PS) has a detection range going beyond the segment (Seg).

7. Linear drive (LA) according to Claim 5 or 6,
furthermore comprising a control device (SE), wherein the control device (SE) is designed to control and/or regulate the movement of the rotor (L).

8. Production machine, machine tool or packing machine, having a linear drive (LA) according to one of Claims 5 to 7.

## Revendications

1. Procédé pour exécuter une transition d'un déplacement commandé d'un chariot (L) à un déplacement régulé du chariot (L) sur un segment (Seg) d'un entraînement linéaire (LA),
dans lequel l'entraînement linéaire (LA) comprend des segments (Seg) et au moins un chariot (L),
dans lequel le chariot (L) est conçu pour se déplacer sur le segment (Seg),
dans lequel, lors d'un changement du déplacement commandé au déplacement régulé, un régulateur pour le déplacement régulé est pré-initialisé de telle manière que la transition est exécutée essentiellement sans à-coups,
- dans lequel le segment (Seg) sert à déplacer le chariot (L) sur le segment (Seg) le long d'une direction, dans lequel le déplacement est initié par un champ magnétique, le champ magnétique est produit à l'aide de bobines du segment (Seg) par un courant, le courant étant fourni par un module de commande associé au segment (Seg),
le procédé comprenant les étapes suivantes :
- détermination d'une vitesse (v-ist) du chariot (L) sur le segment (Seg) et détection d'un angle de commutation (ϕ) d'un phaseur de courant (I-d, I-q, I) du courant,
- détection d'un courant générant une force (I-q-erm) du phaseur de courant (I) en mode commandé à partir d'un angle de commutation prédéfini (ϕ') et de l'angle de commutation détecté (ϕ) , dans lequel l'angle de commutation prédéfini (ϕ') est défini jusqu'au moment qui précède immédiatement la transition dans le mode de fonctionnement commandé, dans lequel, pour déterminer le courant générant une force, une différence entre l'angle de commutation prédéfini (ϕ') et l'angle de commutation détecté (ϕ) est déterminée,
- régulation de la vitesse (v) du chariot (L) au moyen d'un circuit de régulation de vitesse (v-RK), dans lequel le circuit de régulation de vitesse (v-RK) fixe une valeur de consigne de courant générant une force (I-q-soll) pour un circuit de régulation de courant (I-RK),
- pré-initialisation d'une partie intégrale du régulateur de vitesse (v-RK) par le courant générant une force (I-q-erm) détecté en mode de fonctionnement commandé.

2. Procédé pour exécuter une transition d'un déplacement régulé d'un chariot (L) à un déplacement commandé du chariot (L) sur un segment (Seg) d'un entraînement linéaire (LA),
dans lequel l'entraînement linéaire (LA) comprend des segments (Seg) et au moins un chariot (L),
dans lequel le chariot (L) est conçu pour se déplacer sur le segment (Seg),
dans lequel, lors de la transition du déplacement régulé au déplacement commandé, un angle de commutation prédéfini (ϕ') pour le déplacement commandé est pré-initialisé de telle manière que la transition est exécutée essentiellement sans à-coups,
- dans lequel le segment (Seg) sert à déplacer le chariot (L) sur le segment (Seg) le long d'une direction, dans lequel le déplacement est initié par un champ magnétique, le champ magnétique est produit à l'aide de bobines du segment (Seg) par un courant, le courant étant fourni par un module de commande associé au segment (Seg),
le procédé comprenant les étapes suivantes :
- détermination d'une vitesse (v-ist) du chariot (L) sur le segment (Seg) et détection d'un angle de commutation (ϕ) du courant (I-d, I-q, I) en mode régulé,
- régulation de la vitesse (v) du chariot (L) au moyen d'un circuit de régulation de vitesse (v-RK), dans lequel le circuit de régulation de vitesse (v-RK) fixe un courant générant une force (I-q) en tant que valeur de consigne pour un circuit de régulation de courant (I-RK),
- pré-initialisation de l'angle de commutation prédéfini (ϕ') à partir du courant générant une force (I-q) et de l'angle de commutation détecté (ϕ) ,
- commande de la vitesse du chariot par une consigne d'un phaseur de courant (Iz), qui tourne à une fréquence déterminée à partir d'une vitesse de consigne (v-soll).

3. Procédé selon l'une des revendications 1 ou 2, dans lequel la détermination de la vitesse (v-ist) du chariot (L) s'effectue au moyen d'un capteur (PS) qui est associé au segment (Seg).

4. Procédé selon la revendication 3, dans lequel le capteur (PS) a une zone de détection qui va au-delà du segment (Seg), dans lequel une détection d'une position du chariot (L) et/ou la détermination de la vitesse (v-ist) du chariot (L) s'effectuent par le calcul d'une valeur moyenne.

5. Entraînement linéaire (LA) comprenant au moins un segment (Seg) et au moins un chariot, dans lequel le segment (Seg) comprend un capteur (Ps), dans lequel l'entraînement linéaire comprend un circuit de régulation et le circuit de régulation est conçu pour réguler la vitesse du chariot (L) sur le segment (Seg), dans lequel, lors d'un changement d'un déplacement commandé du chariot (L) à un déplacement régulé du chariot (L), un procédé au moins selon la revendication 1 est exécuté et/ou lors d'un changement du déplacement régulé du chariot (L) à un déplacement commandé du chariot (L), un procédé au moins selon la revendication 2 est exécuté.

6. Entraînement linéaire (LA) selon la revendication 5, dans lequel le capteur (PS) comprend une zone de détection qui va au-delà du segment (Seg).

7. Entraînement linéaire (LA) selon la revendication 5 ou 6, comprenant en outre un dispositif de commande (SE), dans lequel le dispositif de commande est conçu pour commander et/ou pour réguler le déplacement du chariot (L).

8. Machine de production, machine-outil ou machine d'emballage comprenant un entraînement linéaire (LA) selon l'une des revendications 5 à 7.
